# EUROPEAN PATENT APPLICATION

(11) **EP 1 728 821 A1**
(43) Date of publication of application: **06.12.2006**
(21) Application number: 05721501.4
(22) Date of filing: 25.03.2005
(51) Int. Cl.: C08L 21/00, C08J 3/22, C08K 7/02

(54) **MASTERBATCH COMPOSITION, RUBBER COMPOSITION CONTAINING THE SAME, AND VULCANIZATE**

(30) Priority: 26.03.2004 JP 2004091422; 26.03.2004 JP 2004091646; 30.03.2004 JP 2004099246
(71) Applicant: ZEON CORPORATION, Tokyo 100-8246 (JP)
(72) Inventor: TSUKADA, Akira, Chiyoda-ku, Tokyo 1008246 (JP); NOMOTO, Hirofumi, Chiyoda-ku, Tokyo 1008246 (JP); FUJITA, Shigeru, Chiyoda-ku, Tokyo 1008246 (JP)
(74) Representative: Albrecht, Thomas
(86) International application number: PCT/JP2005/005574
(87) International publication number: WO 2005/092971

(57) **Abstract**

The main object of the invention is to provide a masterbatch composition capable of increasing the dispersibility of short fibers in a rubber composition. According to the invention, this object is to solve the above-described problems by providing a masterbatch composition comprising 5 to 78 parts by weight of α,β-ethylenically unsaturated nitrile monomer unit-containing copolymer rubber (A), 5 to 78 parts by weight of a multifunctional compound (B) and/or a plasticizer (B') having a molecular weight of 400 or more, and 17 to 90 parts by weight of short fibers (C) of 0.1 to 12 mm in length, provided that the sum of (A), (B) and/or (B'), and (C) is 100 parts by weight.

## Description

### Technical Field

The present invention relates to a masterbatch composition containing short fibers and in particular to a rubber composition comprising the masterbatch composition and to a vulcanizate obtained by vulcanizing the rubber composition.

### Background Art

In recent years, the thermal environmental conditions of an engine room in an automobile become severer because of a higher output of an engine, spreading of front engine/front drive, and measures against exhaust gas, and as rubber sufficiently durable to such conditions, nitrile group-containing copolymer rubber such as acrylonitrile-butadiene rubber has been extensively examined to confer higher performance thereon. It is known that by incorporating short fibers into a rubber composition, the mechanical properties of the resulting rubber molded product, such as tensile strength and tensile stress, are improved. However, the uniform dispersion of the short fibers in a rubber composition is very difficult, and the simple addition of the short fibers to a rubber composition is problematic in that the short fibers are tangled with one another to form masses, thus failing to achieve the desired effect.

To solve this problem, Patent Document 1 discloses a technique wherein rubber (matrix rubber) for dispersing short fibers is pelleted thereby enlarging the contact area between the matrix rubber and the short fibers at the time of kneading, and further the blending ratio of the short fibers to the matrix rubber and the filling factor of the matrix rubber in a kneading machine are controlled thereby dispersing the short fibers in the matrix rubber. Even if the kneading conditions are controlled in this manner, however, it is difficult to disperse short fibers in an excellent state.

Patent Document 2 discloses a technique wherein a softening agent is used at the time of kneading a polymer with short fibers thereby dispersing the short fibers in a rubber composition. This technique involves allowing a softening agent to permeate into short fibers to prevent the short fibers from being tangled with one another thereby improving the dispersibility of the short fibers in a rubber composition. However, the softening agent should be incorporated in amount of 10% by volume or more based on the short fibers in order to allow the softening agent to permeate sufficiently into the short fibers, and when a relatively highly polar rubber such as acrylonitrile-butadiene copolymer rubber is used, the rubber is poor in compatibility with the softening agent to make incorporation of such a large amount of the softening agent difficult. Patent Document 2 supra illustrates di-(2-ethylhexyl) phthalate or di-(2-ethylhexyl) adipate as the softening agent. However, when such a softening agent is used in a large amount, bleeding occurs to make it difficult to incorporate a sufficient amount of the softening agent into the short fibers. The resulting rubber composition is inferior in heat aging resistance and is thus problematic in its use under severe thermal environmental conditions.

On the other hand, Patent Document 3 discloses a technique wherein a masterbatch comprising short fibers and a filler incorporated into a liquid elastomer is used to improve the dispersibilityof the short fibers in a rubber composition. According to this technique, short fibers are previously kneaded with a filler, then the short fibers are untangled and then incorporated into a liquid elastomer, and the resulting masterbatch can be used to improve the dispersibility of the short fibers in a rubber composition. However, the amount of the filler incorporated should be increased in order to disperse a large amount of short fibers, and it is difficult to disperse the short fibers and the filler evenly in the rubber composition.
Patent Document 1: Japanese Patent Application Laid-Open (JP-A) No. 6-207027
Patent Document 2: JP-A No. 8-239484
Patent Document 3: JP-A No. 63-137940

### Disclosure of the Invention

### Problem to be Solved by the Invention

The main object of the present invention is to provide a masterbatch composition capable of improving the dispersibility of short fibers in a rubber composition.

### Means for Solving the Problem

The present inventors made extensive study in light of the circumstances described above, and as a result, they found that when a multifunctional compound is used in place of a softening agent, a rubber even having relatively high polarity, such as acrylonitrile-butadiene copolymer rubber, can be incorporated in a sufficient amount, and a plasticizer (containing a softening agent) having a specified molecular weight can be incorporated in a sufficient amount to prevent short fibers from being tangled with one another, and the present invention was thereby completed. Furthermore, the present inventors found that when a liquid rubber composition having viscosity in a predetermined range is used as a matrix component of a masterbatch and this liquid rubber composition and short fibers are used in a predetermined ratio, the dispersibility of the short fibers in the rubber composition can be improved by using a filler in a predetermined amount or less or without incorporating a filler, and the present invention was thereby completed.

In this manner, according to the present invention, there are provided the following inventions 1 to 7:
1. A masterbatch composition comprising 5 to 78 parts by weight of α,β-ethylenically unsaturated nitrile monomer unit-containing copolymer rubber (A), 5 to 78 parts by weight of a multifunctional compound (B) and/or a plasticizer (B') having a molecular weight of 400 or more, and 17 to 90 parts by weight of short fibers (C) of 0.1 to 12 mm in length, provided that the sum of (A), (B) and/or (B'), and (C) is 100 parts by weight.
2. The masterbatch composition according to the above-described 1, wherein the α,β-ethylenically unsaturated nitrile monomer unit-containing copolymer rubber (A) is a nitrile group-containing copolymer rubber wherein the content of the α,β-ethylenically unsaturated nitrile monomer unit is 40% by weight or less.
3. A rubber composition comprising the masterbatch composition of the above-described 1 or 2.
4. A vulcanizate obtained by vulcanizing the rubber composition of the above-described 3.
5. A masterbatch composition comprising 25 to 550 parts by weight of short fibers (Y) of 0.1 to 12 mm in length, based on 100 parts by weight of a liquid rubber composition (X) having a viscosity of 500 Pascal seconds or less at 70°C as determined by a Brookfield viscometer, wherein the content of a filler in the masterbatch composition is 8% by weight or less.
6. A rubber composition comprising the masterbatch composition of the above-described 5.
7. A vulcanizate obtained by vulcanizing the rubber composition of the above-described 6.

### Effect of the Invention

By using the masterbatch composition of the present invention, there can be brought about an effect of facilitating the dispersion of short fibers in a rubber composition obtained by using the masterbatch composition. A vulcanizate obtained by vulcanizing this rubber composition is excellent in mechanical properties such as tensile strength and tensile stress. A vulcanizate obtained by using a masterbatch composition containing a multifunctional compound and a plasticizer in the above-predetermined amounts is made further excellent in compression permanent set and heat aging resistance.

### Best Mode for Carrying Out the Invention

Hereinafter, the masterbatch composition of the present invention, a rubber composition containing the same, and a vulcanizate obtained by vulcanizing the rubber composition are described in detail.

### A. Masterbatch composition

With respect to the masterbatch composition of the present invention, there are first and second aspects. The first and second aspects are described respectively.

### (First aspect)

The masterbatch composition in this aspect comprises 5 to 78 parts by weight of α,β-ethylenically unsaturated nitrile monomer unit-containing copolymer rubber (A), 5 to 78 parts by weight of a multifunctional compound (B) and/or a plasticizer (B') having a molecular weight of 400 or more, and 17 to 90 parts by weight of short fibers (C) of 0.1 to 12 mm in length, provided that the sum of (A), (B) and/or (B'), and (C) is 100 parts by weight.

The α,β-ethylenically unsaturated nitrile monomer unit-containing copolymer rubber (A) (hereinafter referred to as nitrile group-containing copolymer rubber (A) in some cases) used in this aspect is a rubber obtained by copolymerizing an α,β-ethylenically unsaturated nitrile monomer with another monomer.

When the plasticizer (B') is used in the range of 5 to 78 parts by weight in the nitrile group-containing copolymer rubber (A), the content of the α,β-ethylenically unsaturated nitrile monomer unit is preferably 40% by weight or less, more preferably 39% by weight or less, still more preferably 38% by weight or less. When the content of the α,β-ethylenically unsaturated nitrile monomer unit is too high, the compatibility between the nitrile group-containing copolymer rubber (A) and the plasticizer (B') is poor and bleeding tends to occur easily. Low-temperature resistance also tends to be worse. On the other hand, the content of the α,β-ethylenically unsaturated nitrile monomer unit is preferably 10% by weight or more, more preferably 12% by weight or more, still more preferably 14% by weight or more. When the content of the α,β-ethylenically unsaturated nitrile monomer unit is too low, oil resistance tends to be lowered. That is, the content of the α,β-ethylenically unsaturated nitrile monomer unit is preferably 10 to 40% by weight, more preferably 12 to 39% by weight, still more preferably 14 to 38% by weight.

When the plasticizer (B') is not used in the above range, the content of the α,β-ethylenically unsaturated nitrile monomer unit is preferably 10 to 60% by weight, more preferably 12 to 55% by weight, still more preferably 14 to 50% by weight. When the content of the α,β-ethylenically unsaturated nitrile monomer unit is too low, oil resistance tends to be lowered, while when the content is too high, low-temperature resistance tends to be worse.

Examples of the α,β-ethylenically unsaturated nitrile monomer include acrylonitrile, methacrylonitrile and α-chloroacrylonitrile, among which acrylonitrile is preferable.

Examples of another monomer copolymerized with the α,β-ethylenically unsaturated nitrile monomer include a conjugated diene monomer and a non-conjugated diene monomer.

Examples of the conjugated diene monomer include 1,3-butadiene, isoprene, 2,3-dimethyl-1,3-butadiene and 1, 3-pentadiene, among which 1, 3-butadiene and isoprene are preferable.

The non-conjugated diene monomer is preferably that having 5 to 12 carbon atoms, and examples thereof include 1,4-pentadiene, 1,4-hexadiene, vinyl norbornene and dicyclopentadiene.

As another monomer, an α-olefin, an aromatic vinyl monomer, a fluorine-containing vinyl monomer, an α,β-ethylenically unsaturated monocarboxylic acid and an ester thereof, a α,β-ethylenically unsaturated multivalent carboxylic acid and an anhydride thereof or an ester thereof, and copolymerizable antioxidants can be copolymerized with the α,β-ethylenically unsaturated nitrile monomer.

The α-olefin is preferably that containing 2 to 12 carbon atoms, and examples thereof include ethylene, propylene, 1-butene, 4-methyl-1-pentene, 1-hexene, 1-octene and the like.

Examples of the aromatic vinyl monomer include styrene, α-methyl styrene, vinyl pyridine and the like. Examples of the fluorine-containing vinyl monomer include fluoroethyl vinyl ether, fluoropropyl vinyl ether, o-trifluoromethyl styrene, vinyl pentafluorobenzoate, difluoroethylene, tetrafluoroethylene and the like.

Examples of the α,β-ethylenically unsaturated monocarboxylic acids include acrylic acid, methacrylic acid and the like. Examples of the α,β-ethylenically unsaturated monocarboxylic acid ester include methyl acrylate, ethyl acrylate, butyl acrylate, methyl methacrylate, butyl methacrylate and the like. Examples of the α,β-ethylenically unsaturated multivalent carboxylic acid include itaconic acid, fumaric acid, maleic acid and the like. Examples of the α,β-ethylenically unsaturated multivalent carboxylic acid anhydride include itaconic anhydride, maleic anhydride and the like. Examples of the α,β-ethylenically unsaturated multivalent carboxylic acid ester include monoethyl maleate, dimethyl maleate, dimethyl fumarate, diethyl fumarate, di-n-butyl fumarate, di-2-ethylhexyl fumarate, dimethyl itaconate, diethyl itaconate, di-n-butyl itaconate, di-2-ethylhexyl itaconate and the like.

Examples of the copolymerizable antioxidant include N-(4-anilinophenyl) acrylamide, N-(4-anilinophenyl) methacrylamide, N-(4-anilinophenyl) cinnamamide, N-(4-anilinophenyl) crotonamide, N-phenyl-4-(3-vinylbenzyloxy) aniline, N-phenyl-4-(4-vinylbenzyloxy) aniline and the like.

As the nitrile group-containing copolymer rubber (A), acrylonitrile-butadiene copolymer rubber and a hydride thereof are usually preferably used.

When a rubber composition comprising the masterbatch composition is used in applications where heat resistance and weather resistance are required at high degrees, the nitrile group-containing copolymer rubber (A) preferably has a relatively low iodine value, for example an iodine value of 120 or less.

The Mooney viscosity ML(₁₊₄) of the nitrile group-containing copolymer rubber (A) at 100°C is preferably 5 to 300, more preferably 10 to 250, still more preferably 15 to 200. When the Mooney viscosity is too low, the resulting vulcanizate tends to be inferior in mechanical properties, while when the Mooney viscosity is too high, the vulcanizate tends to be inferior in processability.

The multifunctional compound (B) used in this aspect is not particularly limited insofar as it has two or more, preferably two or three, ethylenically unsaturated double bonds, and multifunctional compound (B) is preferably liquid at 150°C or lower. This is because when the multifunctional compound (B) is liquid in this temperature range, the multifunctional compound (B) can sufficiently permeate into short fibers to effectively prevent the short fibers from being tangled with one another.

The multifunctional compound (B) used in this aspect is exemplified by an allyl compound, a vinyl compound, an acrylate (or a methacrylate), and an acrylic (or a methacrylic) acid amide, each of them has two or more ethylenically unsaturated double bonds.

Examples of the allyl compound include tri (meth) allyl cyanurate, tri(meth)allyl isocyanurate, diallyl isophthalate, diallyl terephthalate and the like.

Examples of the vinyl compound include divinyl biphenyl, divinyl benzene, trivinyl cyclohexane and the like.

Examples of the (meth)acrylate include isocyanuric acid tri(meth)acrylate, isocyanuric acid triethoxy tri (meth) acrylate, trimethylol propane tri (meth) acrylate, trimethylol propane triethoxy tri(meth)acrylate, trimethylol propane tripropoxy tri(meth)acrylate, glyceryl propoxy tri(meth)acrylate, pentaerythritol tri(meth)acrylate, pentaerythritol tetra(meth)acrylate, ditrimethylol propane tetra(meth)acrylate, dipentaerythritol penta(meth)acrylate, alkoxylated bisphenol A di(meth)acrylate, propoxylated bisphenol A di(meth)acrylate, alkoxylated hydrogenated bisphenol A di(meth)acrylate, propoxylated hydrogenated bisphenol A di(meth)acrylate, ethylene glycol di(meth)acrylate, polyethyleneglycoldi(meth)acrylate,1,3-butyleneglycol di(meth)acrylate, neopentyl glycol di(meth)acrylate, neopentyl glycol dialkoxy di(meth)acrylate, dicyclopentadienyl di(meth)acrylate and the like.

Examples of the (meth)acrylic acid amide include methylene bisacrylamide and the like.

Preferable among these multifunctional compounds are triallyl cyanurate, triallyl isocyanurate, trimethylol propane trimethacrylate, ethylene glycol dimethacrylate, diallyl isophthalate, diallyl terephthalate and the like.

These multifunctional compounds (B) can be used alone or as a mixture of two or more thereof.

In this aspect, the multifunctional compound (B), even when used in a sufficient amount to permeate into short fibers, can be uniformly dispersed without deteriorating the compatibility with the nitrile group-containing copolymer rubber (A).

The molecular weight of the plasticizer (B') used in this aspect should be 400 or more, and is preferably 410 or more, more preferably 420 or more. When the molecular weight is too small, the resulting rubber molded product tends to be inferior in heat aging resistance.

The plasticizer (B') is not particularly limited insofar as its molecular weight is 400 or more, and examples include a phthalic acid derivative, an adipic acid derivative, an azelaic acid derivative, a sebacic acid derivative, a dodecane-2-acid derivative, a trimellitic acid derivative, a succinic acid derivative, a citric acid derivative, a phosphoric acid derivative, a glutaric acid derivative, a glycol derivative, an epoxy derivative, a polyester plasticizer and a polymer plasticizer.

Examples of the phthalic acid derivative include diisononyl phthalate, diisodecyl phthalate, ditridecyl phthalate, dialkyl phthalates having 6 to 11 carbon atoms (diheptyl phthalate, dinonyl phthalate, diundecyl phthalate and the like), benzyl phthalate, phthalic acid polyester and the like.

Examples of the adipic acid derivative include diisodecyl adipate, di-n-hexyl adipate, diethoxyethyl adipate, adipic acid polyester, and the like.

Examples of the azelaic acid derivative include dioctyl azelate and the like.

Examples of the sebacic acid derivative include substituted derivatives thereof such as dioctyl sebacate, dibutoxy ethoxy ethyl sebacate, and the like.

Examples of the dodecane-2-acid derivative include di-2-ethylhexyl dodecadionate and the like.

Examples of the trimellitic acid derivative include tri-(2-ethylhexyl) trimellitate, tri-n-octyl trimellitate, triisodecyl trimellitate, triisooctyl trimellitate, higher alcohol trimellitate, linear trimellitate, trialkyl trimellitate, and the like.

Examples of the succinic acid derivative include dioctyl succinate and the like.

Examples of the citric acid derivative include acetyl triethyl citrate, acetyl tri-(2-ethylhexyl) citrate, and the like.

Examples of the phosphoric acid derivative include tri-(2-ethylhexyl) phosphate, trixylenyl phosphate, and the like.

Examples of the glutaric acid derivative include dialkyldiethyl glutarate, dibutoxyethoxyethyl glutarate, didecyl glutarate, diisodecyl glutarate, polyester glutarate, and the like.

Examples of the glycol derivative include triethylene glycol di-(2-ethyl hexoate), triethylene glycol dipelargonate, polyethylene glycol, and the like.

Examples of the epoxy derivative include epoxylated soybean oil, epoxylated linseed oil, epoxylated fatty acid monoesters, di-2-ethylhexyl epoxy hexahydrophthalate, diisodecyl epoxy hexahydrophthalate, epoxylated octyl thorate, epoxylated glycol dioleate, and the like.

Examples of the polymer plasticizer include polyester plasticizer, polyetherplasticizer, poly-α-methylstyrene and the like.

These plasticizers (B') can be used alone or as a mixture of two or more thereof.

In this aspect, the plasticizer (B') having the specific molecular weight, when incorporated in a sufficient amount for permeation into short fibers, can be uniformly dispersed without deteriorating compatibility with the nitrile group-containing copolymer rubber (A).

The length of the short fibers (C) used in this aspect should be 0.1 to 12 mm, and is preferably 0.3 to 10 mm, more preferably 0.5 to 8 mm. When the length of the short fibers (C) is too long, the short fibers are easily tangled with one another to form masses and thus tend to be difficult to be dispersed in the rubber composition, while when the length is too short, the short fibers may fail to confer desired mechanical properties such as tensile strength and tensile stress and tend to be inferior in compression permanent set.

Examples of the short fibers (C) include an organic fiber and an inorganic fiber. Examples of the organic fiber include: natural fibers such as cotton and wood cellulose; and synthetic fibers such as polyamide, polyester, polyvinyl alcohol, rayon, polyparaphenylene benzobisoxazole, polyethylene, polypropylene, polyarylate, polyimide, polyphenylene sulfide, polyether ether ketone, polylactic acid, polycaprolactone, polybutylene succinate, and fluorine polymer. Examples of the inorganic fiber include glass fibers, carbon fibers and the like. In this aspect, the synthetic fibers are preferably used, among which polyamide is more preferably used because of its significant effect of giving a rubber molded product with mechanical properties such as tensile strength and tensile stress. Examples of the polyamide include polyamides each having an aliphatic chain mainly, polyamides each having an aromatic chain mainly, and the like, among which the polyamides each having an aromatic chain mainly are preferable. The polyamide having an aromatic chain mainly is preferably the one usually referred to as aramid, which is particularly preferably the one containing p-phenylene terephthalamide.

The short fibers may be in a pulp form having fibrils and may be subjected to various treatments with an epoxy adhesive, an isocyanate adhesive, resorcin-formaldehyde resin/latex or the like. These short fibers may be used alone or as a mixture of two or more thereof.

The masterbatch composition in this aspect comprises the nitrile group-containing copolymer rubber (A), the multifunctional compound (B) and/or the plasticizer (B') having a molecular weight of 400 or more, and the short fibers (C) of 0.1 to 12 mm in length, wherein the proportion of these respective ingredients should be 5 to 78 parts by weight of the nitrile group-containing copolymer rubber (A), 5 to 78 parts by weight of the multifunctional compound (B) and/or the plasticizer (B') having a molecular weight of 400 or more, and 17 to 90 parts by weight of the short fibers (C) of 0.1 to 12 mm in length (provided that the sum of (A), (B) and/or (B'), and (C) is 100 parts by weight; this hereinafter applies), and is preferably 10 to 71 parts by weight of the nitrile group-containing copolymer rubber (A), 10 to 71 parts by weight of the multifunctional compound (B) and/or the plasticizer (B'), and 19 to 80 parts by weight of the short fibers of 0.1 to 12 mm in length (C), more preferably 15 to 65 parts by weight of the nitrile group-containing copolymer rubber (A), 15 to 65 parts by weight of the multifunctional compound (B) and/or the plasticizer (B'), and 20 to 70 parts by weight of the short fibers of 0.1 to 12 mm in length (C).

When the content of the multifunctional compound (B) is too low, the multifunctional component cannot sufficiently permeate into the short fibers, and thus the short fibers tend to be inferior in dispersibility in the rubber composition. When the content of the multifunctional component (B) is too high, on the other hand, bleeding may occur in the resulting rubber composition. When the content of the plasticizer (B') is too low, the plasticizer cannot sufficiently permeate into the short fibers, and thus the short fibers tend to be inferior in dispersibility in the rubber composition. When the content of the plasticizer is too high, on the other hand, bleeding may occur on the surface of the rubber molded product to make handling difficult. Further, the rubber molded product tends to be inferior in heat aging resistance.

When the content of the short fibers (C) is too low, it can be difficult to give desired mechanical properties, such as tensile strength and tensile stress, to the resultingrubbermoldedproduct. Particularly, the rubber molded product tends to be poor in tensile stress and hardness. When the content of the short fibers is too high, on the other hand, the short fibers (C) become inferior in dispersibility, so particularly tensile strength and elongation tend to be poor.

The masterbatch composition in this aspect may contain substances being liquid at 150°C or lower, such as a plasticizer or a softening agent other than the plasticizer described above, and fats and oils, in such a range that the object of the present invention is not hindered. These liquid substances are not particularly limited insofar as they are generally used in rubber. The amount of these substances incorporated is usually 50% by weight or less, preferably 30% by weight or less, more preferably 10% by weight or less, based on the total amount of the multifunctional compound (B) and/or the plasticizer (B') and these liquid substances.

The masterbatch composition in this aspect can contain additives used in general rubber, for example, a filler, an antioxidant, a vulcanizing agent, a vulcanization accelerator, a pigment, a tackifier, a scorch retarder and the like. The amount of these additives incorporated is not particularly limited in such a range that the effect of this aspect is not inhibited.

The method of producing the masterbatch composition in this aspect is not particularly limited, and for example, the masterbatch composition can be produced by kneading the nitrile group-containing copolymer rubber (A) and the multifunctional compound (B) and/or the plasticizer (B') and the short fibers (C), then optionally adding additives such as a filler and the like as necessary, and kneading the resulting mixture. Alternatively, the masterbatch composition can be produced by kneading the short fibers (C) and the multifunctional compound (B) and/or the plasticizer (B'), then adding the nitrile group-containing copolymer rubber (A), and kneading the resulting mixture. In this aspect, the masterbatch composition in which the dispersibility of the short fibers is excellent can be obtained by an easy method without necessity for pelleting the nitrile group-containing copolymer rubber (A).

Alternatively, the masterbatch composition can be obtained by adding the short fibers (C) to a composition of the nitrile group-containing copolymer rubber (A) in a latex state, then coagulating the mixture, mixing the multifunctional compound (B) and/or the plasticizer (B') with the resulting coagulum, or by adding the multifunctional compound (B) and/or the plasticizer (B') to a composition of the nitrile group-containing copolymer rubber (A) in a latex state, then coagulating the mixture, and mixing the short fibers (C) with the resulting coagulum.

Alternatively, the masterbatch composition can be obtained by adding the multifunctional compound (B) and/or the plasticizer (B') and the short fibers (C) to a composition of the nitrile group-containing copolymer rubber (A) in a latex state and then coagulating the mixture.

In this case, the mixture containing the multifunctional compound (B) and/or the plasticizer (B') and the short fibers (C) may be added directly to the composition, or each ingredient may be previously converted into an emulsion and then added to the composition. In addition, a surfactant, a stabilizer, a protective colloidal agent, a heat sensitizer, an anti-freezing agent, a defoaming agent, a thickener, water, an emulsifying agent, a pH adjusting agent, or the like, may be added.

By using such masterbatch composition in this aspect, the short fibers can be easily dispersed in a rubber composition. By being dispersed the short fibers in a rubber composition, the mechanical properties of the resulting rubber molded product, such as tensile strength and tensile stress, can be improved. Further, the rubber molded product can be made excellent in compression permanent set and heat aging resistance.

### (Second aspect)

The masterbatch composition in this aspect comprises 25 to 550 parts by weight of short fibers (Y) of 0.1 to 12 mm in length, based on 100 parts by weight of a liquid rubber composition (X) having a viscosity of 500 Pascal seconds or less at 70°C as determined by a Brookfield viscometer, wherein the content of a filler in the masterbatch composition is 8% by weight or less.

The liquid rubber composition (X) referred to herein is the one which should contain liquid rubber and if necessary contains substances being liquid at 150°C or lower, such as a plasticizer, a softening agent, fats and oils, and a multifunctional compound.

In this aspect, the viscosity at 70°C of the liquid rubber composition (X) as determined by a Brookfield viscometer should be 500 Pascal seconds or less, and is preferably 300 Pascal seconds or less, more preferably 100 Pascal seconds or less. When the viscosity is higher than this range, the short fibers tend to be difficult to be mixed in the liquid rubber composition (X), and thus the dispersibility of the short fibers in the rubber composition tends to be worsened.

On the other hand, the viscosity of the liquid rubber composition (X) is usually 0.0001 Pascal second or more. When the viscosity is lower than this range, bleeding may occur on the composition using the same.

That is, the viscosity of the liquid rubber composition (X) is preferably 0.0001 to 500 Pascal seconds, more preferably 0.0001 to 300 Pascal seconds, still more preferably 0.0001 to 100 Pascal seconds.

The liquid rubber contained in the liquid rubber composition (X) is not particularly limited insofar as it is a substance generally known as liquid rubber. For its higher effect of improving the dispersibility of the short fibers, the viscosity of the liquid rubber at 70°C, as determined by a Brookfield viscometer, is preferably 900 Pascal seconds or less, more preferably 800 Pascal or less, still more preferably 700 Pascal seconds or less. When the viscosity is higher than this range, the short fibers tend to be difficult to be dispersed in the liquid rubber, and thus the short fibers tend to be inferior in dispersibility in the resulting rubber composition.

On the other hand, the viscosity of the liquid rubber is usually 0.0001 Pascal second or more, preferably 0.0002 Pascal second or more, more preferably 0.0003 Pascal second or more. When the viscosity is lower than this range, the masterbatch composition tends to be difficult to be dispersed in the rubber composition because of a lack of shear stress.

That is, the viscosity of the liquid rubber is preferably 0.0001 to 900 Pascal seconds, more preferably 0.0002 to 800 Pascal seconds, still more preferably 0.0003 to 700 Pascal seconds.

The weight-average molecular weight (Mw) of the liquid rubber, in terms of (standard polystyrene-equivalent molecular weight) determined by gel permeation chromatography, is preferably 100 to 50,000, more preferably 200 to 40,000, still more preferably 300 to 30,000. The liquid rubber having an Mw in such range can usually show the viscosity described above.

Examples of the liquid rubber used in this aspect include known liquid rubbers such as liquid diene rubber, liquid silicone rubber, liquid acrylic rubber, liquid urethane rubber and liquid polysulfide rubber. Among these liquid rubbers, the liquid diene rubber is preferably used, among which a liquid nitrile group-containing diene rubber and a hydride thereof are preferably used. This is because the nitrile group-containing diene rubber and a hydride thereof can exhibit a significant reinforcing effect by the interaction thereof with the short fibers, and also because when the nitrile group-containing diene rubber and a hydride thereof are used as the rubber component of a rubber composition into which the masterbatch composition of this aspect is to be incorporated, the dispersibility of the masterbatch composition of this aspect in the rubber composition can be made excellent. These liquid rubbers may be used alone or as a mixture of two or more thereof.

The liquid nitrile group-containing diene rubber used preferably in this aspect is not particularly limited insofar as it is a nitrile group-containing liquid diene rubber, which is for example a rubber obtained by copolymerizing an α,β-ethylenically unsaturated nitrile monomer with another monomer. The content of the α,β-ethylenically unsaturated nitrile monomer unit in the diene rubber is preferably 10 to 45% by weight, more preferably 15 to 40% by weight. The iodine value is preferably 120 or less. Examples of the α,β-ethylenically unsaturated nitrile monomer include acrylonitrile, methacrylonitrile, α-chloroacrylonitrile and the like, among which acrylonitrile is preferable.

Examples of another monomer copolymerized with the α,β-ethylenically unsaturated nitrile monomer include a conjugated diene monomer, a non-conjugated diene monomer and the like. Examples of the conjugated diene monomer include 1,3-butadiene, isoprene, 2,3-dimethyl-1,3-butadiene, 1, 3-pentadiene and the like, among which 1,3-butadiene and isoprene are preferable. The non-conjugated diene monomer is preferably that containing 5 to 12 carbon atoms, and examples thereof include 1,4-pentadiene, 1,4-hexadiene, vinyl norbornene, dicyclopentadiene and the like. Further, an α-olefin, an aromatic vinyl monomer, a fluorine-containing vinyl monomer, an α,β-ethylenically unsaturated monocarboxylic acid and an ester thereof, an α, β-ethylenically unsaturated multivalent carboxylic acid and an anhydride thereof or an ester thereof, and a copolymerizable antioxidant can also be copolymerized.

The α-olefin is preferably that containing 2 to 12 carbon atoms, and examples thereof include ethylene, propylene, 1-butene, 4-methyl-1-pentene, 1-hexene, 1-octene and the like. Examples of the aromatic vinyl monomer include styrene, α-methyl styrene, vinyl pyridine and the like. Examples of the fluorine-containing vinyl monomer include fluoroethyl vinyl ether, fluoropropyl vinyl ether, o-trifluoromethyl styrene, vinyl pentafluorobenzoate, difluoroethylene, tetrafluoroethylene and the like. Examples of the α,β-ethylenically unsaturated monocarboxylic acid include acrylic acid, methacrylic acid and the like. Examples of the α,β-ethylenically unsaturated monocarboxylic acid ester include methyl acrylate, ethyl acrylate, butyl acrylate, methyl methacrylate, butyl methacrylate and the like. Examples of the α,β-ethylenically unsaturated multivalent carboxylic acid include itaconic acid, fumaric acid, maleic acid and the like. Examples of the α,β-ethylenically unsaturated multivalent carboxylic acid anhydride include itaconic anhydride, maleic anhydride and the like. Examples of the α,β-ethylenically unsaturated multivalent carboxylic acid ester include monoethyl maleate, dimethyl maleate, dimethyl fumarate, diethyl fumarate, di-n-butyl fumarate, di-2-ethylhexyl fumarate, dimethyl itaconate, diethyl itaconate, di-n-butyl itaconate, di-2-ethylhexyl itaconate and the like. Examples of the copolymerizable antioxidant include N-(4-anilinophenyl) acrylamide, N-(4-anilinophenyl) methacrylamide, N-(4-anilinophenyl) cinnamamide, N-(4-anilinophenyl) crotonamide, N-phenyl-4-(3-vinylbenzyloxy) aniline, N-phenyl-4-(4-vinylbenzyloxy) aniline and the like.

As the liquid rubber, acrylonitrile-butadiene copolymer rubber and a hydride thereof are preferably used.

The content of the liquid rubber in the liquid rubber composition (X) is preferably 3% by weight or more, more preferably 6% by weight or more, still more preferably 9% by weight or more. When the content of the liquid rubber is too low, the dispersibility of the short fibers in the rubber composition may be deteriorated, or bleeding may occur on the rubber composition.

As described above, the liquid rubber composition (X) may further contain substances being liquid at 150°C or lower, such as a plasticizer, a softening agent, fats and oils, and a multifunctional compound in such a range that the purpose of the aspect is not hindered. As the plasticizer (including a softening agent) and the multifunctional compound, those described in the first aspect are preferably used. The ratio thereof to the liquid rubber shall also be in accordance with the ratio to the nitrile group-containing copolymer rubber (A) in the first aspect. Even if the viscosity of the liquid rubber in the liquid rubber composition (X) is high, the viscosity of the composition can be reduced to 500 Pascal seconds or less by using these liquid substances, and accordingly, the dispersibility of the short fibers in a rubber composition into which the masterbatch composition was incorporated can be improved. These liquid substances are not particularly limited insofar as they can be generally used in rubber.

The method of producing the liquid rubber composition (X) described above is not particularly limited, and the liquid rubber composition (X) can be produced by blending and kneading the respective ingredients by a conventional method of producing a general rubber composition. When the liquid substances described above are incorporated, the liquid rubber may be preliminarily mixed with the liquid substances and then mixed with the short fibers by a kneading machine, or these ingredients may be mixed all at once with one another in a kneading machine at the time of production of the masterbatch composition described later.

The length and type of the short fibers (Y) used in this aspect are the same as described above with respect to the short fibers (C) in the first aspect, and are thus not described herein.

The content of the short fibers (Y) should be 25 to 550 parts by weight based on 100 parts by weight of the liquid rubber composition (X), and is preferably 27 to 500 parts by weight, more preferably 29 to 450 parts by weight. When the content of the short fibers (Y) is too low, it can be difficult to give desired mechanical properties, such as tensile strength and tensile stress, to the resulting rubber molded product (vulcanizate obtained by vulcanizing the rubber composition), while when the content of the short fibers (Y) is too high, the short fibers (Y) become poor in dispersibility, and particularly tensile strength and elongation tend to be poor.

By using the liquid rubber composition (X) of predetermined viscosity in this aspect, the short fibers can be dispersed in a rubber composition even if the amount of a filler is lower than the predetermined amount or no filler is incorporated into the masterbatch composition. Accordingly, the content of a filler in the masterbatch composition in this aspect can be 8% by weight or less. For further improving the dispersibility of the filler, the content of the filler is preferably 7% by weight or less, more preferably 5% by weight or less. By reducing the content of the filler in this aspect, the short fibers can be dispersed more easily in a rubber composition without taking the dispersibility of the filler into consideration. Examples of the filler include materials used generally in rubber, such as carbon black, silica, clay, talc, and calcium carbonate.

The content of the liquid rubber composition (X) in the masterbatch composition in this aspect is preferably 15 to 80% by weight, more preferably 20 to 75% by weight, based on the liquid rubber standard.

The masterbatch composition in this aspect can contain additives used in general rubber, for example, a filler (including a reinforcing agent) other than the filler described above, anantioxidant, a vulcanizing agent, a vulcanization accelerator, a vulcanization assistant, a vulcanization retarder, a pigment, a tackifier, a scorch retarder and the like. The amount of these additives incorporated is not particularly limited in such a range that the effect of this aspect is not substantively hindered.

The method of producing the masterbatch composition in this aspect is not particularly limited, and for example, the masterbatch composition can be produced by kneading the liquid rubber composition (X) with the short fibers (Y), optionally adding additives such as a filler and the like as necessary, and kneading the resulting mixture. In this aspect, the masterbatch composition in which the dispersibility of the short fibers is excellent can be obtained by an easy method without necessity for previous untangling of the short fibers. Alternatively, the masterbatch composition can be obtained by mixing the short fibers (Y) with the liquid rubber composition (X) in a latex state and then coagulating the resulting mixture. In this case, the additives may be added directly to the latex, or each additive may be previously converted into an emulsion and then added to the latex. In addition, a surfactant, a stabilizer, a protective colloidal agent, a heat sensitizer, an anti-freezing agent, a defoaming agent, a thickener, water, an emulsifying agent, a pH adjusting agent, or the like, may be added.

By using such masterbatch composition in this aspect, the short fibers can be easily dispersed in a rubber composition. In this manner, by being dispersed the short fibers in a rubber composition, the mechanical properties of the resulting rubber molded product, such as tensile strength and tensile stress, can be improved. B. Rubber composition

The rubber composition of the present invention comprises the masterbatch composition in the first or second aspect described in detail in the above column "A. Masterbatch composition". By incorporating the masterbatch composition, the rubber composition in the present invention can be made excellent in the ability to disperse the short fibers.

For allowing the masterbatch composition used in the present invention to be easily dispersed in the rubber composition, it is preferable that the masterbatch composition is suitably selected such that the nitrile group-containing copolymer rubber (A) or the liquid rubber in the liquid rubber composition (X) used in the masterbatch composition is well compatible with the rubber serving as the matrix component of the rubber composition into which the masterbatch composition is to be incorporated.

The content of the masterbatch composition in the rubber composition of the present invention is not particularly limited in such a range that the masterbatch composition can be dispersed in the rubber composition, and the content of the masterbatch composition is preferably 0.12 to 175 parts by weight, more preferably 0.6 to 100 parts by weight, still more preferably 1.2 to 50 parts, based on 100 parts by weight of the total amount of the rubber component serving as the matrix component of the rubber composition. When the content of the masterbatch composition is too low, the rubber composition cannot be sufficiently given with mechanical characteristics such as tensile strength and tensile stress, while when the content is too high, the rubber composition may be inferior in processability, and the liquid components such as the multifunctional component contained in the masterbatch composition may cause bleeding.

By incorporating the masterbatch composition, the rubber composition of the present invention can easily disperse the short fibers therein. The content of the short fibers in the rubber composition of the present invention is preferably 0.1 to 35 parts by weight, more preferably 0.5 to 20 parts by weight, still more preferably 1 to 10 parts by weight, based on 100 parts by weight of the total amount of the rubber component serving as the matrix component of the rubber composition. Within this range, the rubber composition can be made excellent in the ability to disperse the short fibers by an ordinary mixing method.

The rubber contained as the matrix component in the rubber composition of the present invention is not particularly limited insofar as it is ordinarily known rubber, and the rubber used is preferably a diene rubber containing nitrile group or a hydride thereof, for example, acrylonitrile-butadiene copolymer rubber or a hydride thereof, because such rubber can exhibit a significant reinforcing effect upon dispersion of the short fibers. In particular, the hydride is preferably used where heat aging resistance and weather resistance are required.

The rubber composition of the present invention can contain additives used in general rubber. The additives can be exemplified by those explained in the above column "A. Masterbatch composition". As the vulcanizing agent in particular among those described above, an α,β-ethylenically unsaturated carboxylic acid metal salt or organic peroxide vulcanizing agent is preferably contained in the rubber composition.

The method of producing the rubber composition according to the present invention is the same as a method of producing a general rubber composition, and the rubber composition of the invention can be produced for example by incorporating the above masterbatch composition into a kneaded rubber composition made of one or more, matrix-constituting rubbers, and then kneading the resulting mixture. In the present invention, the rubber composition in which the dispersibility of the short fibers is excellent can be obtained in this manner by the method of incorporating and kneading the masterbatch composition.

### C. Vulcanizate

The vulcanizate of the present invention is obtained by incorporating a vulcanizing agent into the rubber composition described in detail in the above column "B. Rubber composition" and vulcanizing the mixture. The vulcanizate of the present invention is obtained by vulcanizing the rubber composition in which the dispersibility of the short fibers is excellent, and thus the vulcanizate has been made excellent in mechanical properties such as tensile strength and tensile stress. The vulcanizate of the present invention has also been made excellent in compression permanent set and heat aging resistance. When the vulcanizate is excellent in compression permanent set, that is, when the compression permanent set is low, the vulcanizate can, even upon deformation, maintain a predetermined shape over a prolonged period of time. When the vulcanizate is excellent in heat aging resistance, the vulcanizate is hardly deteriorated against heating or the like.

The amount of the vulcanizing agent incorporated into the rubber composition of the present invention is preferably about 1 to 10 parts by weight, based on 100 parts of the total amount of the rubber component in the rubber composition.

Examples of the vulcanization method include a method which involves heating the rubber composition during or after molding.

The vulcanizing temperature, though varying depending on the type of the rubber composition, is preferably 100 to 200°C, more preferably 130 to 195°C, still more preferably 140 to 190°C. When the vulcanizing temperature is too low, a longer vulcanizing time may be required or the vulcanization density may be lowered. On the other hand, when the vulcanizing temperature is too high, deficient molding may be caused in some cases.

The vulcanization time significantly varies depending on the vulcanization method, the vulcanization temperature and the shape of a vulcanizate, and the vulcanization time is usually preferably 1 minute to 12 hours from the viewpoint of achieving suitable vulcanization density and production efficiency.

Examples of the heating method include known methods used as ordinary methods of vulcanizing rubber, such as press heating, steam heating, oven heating, hot-air heating, and the like. Depending on the shape and size of a vulcanizate, the vulcanizate may be vulcanized in the surface thereof, but not in the inside thereof. In this case, the rubber composition may be vulcanized as described above and then subjected to secondary vulcanization at which it is kept at high temperatures.

The applications of the vulcanizate of the present invention are not particularly limited, and the vulcanizate of the present invention can be used in industrial products such as a seal, rubber belt, rubber roll, rubber hose, tire, packing, boots, brake pad, crutch plate or the like and parts thereof, as well as in a packer, blowout preventer, pipe protector or the like used in an oil field and gas field. The seal includes a dynamic seal for rotation, rocking or reciprocation and a static seal. Examples of the dynamic seal include an oil seal, piston seal, mechanical seal and the like, and the examples of the static seal include an O-ring, mental legend seal, and various gaskets. Examples of the rubber belt include a flat belt, V belt, V ribbed belt, round belt, square belt, toothed belt and the like. Examples of the rubber roll include rolls as a part of OA devices such as a printer, and a copier; fiber processing rolls such as a fiber spinning stretching roll, and a cotton spinning drafting roll; and steel manufacturing rolls such as a bridle roll, snubber roll, and steering roll. Examples of the rubber hose include single-tube rubber hose, multilayer rubber hose, lace-up reinforced hose, cloth-wound reinforced hose, and the like. The vulcanizate of the present invention is excellent in mechanical properties such as tensile strength and tensile stress, and can thus be used preferably in various tires, belts, hoses, packing, seals, boots, automobile engine rooms, and the like. Particularly, the vulcanizate is useful as a rubber molded product used under severe conditions such as in automobile engine rooms.

The present invention is not limited to the embodiments described above. The embodiments described above are mere illustrative, and any embodiments having substantially the same constitution as the technical idea described in the claims of the invention and exhibiting the same working effect as in the claims fall under the scope of the invention.

### Examples

Hereinafter, the present invention is described in more detail with reference to the Examples and Comparative Examples. In the following description, "parts" or "%" concerning on formulation is expressed on a weight basis unless otherwise specified. Tests for evaluation of respective characteristics were carried out as follows.

### (1) Number of short-fiber masses

The surfaces of the masterbatch composition in a sheet form and the vulcanized sheet obtained by vulcanizing the rubber composition described later were observed with the naked eye, and short-fiber masses of 1 mm or more on the masterbatch composition in a sheet form and short-fiber masses of 0.5 mm or more on the vulcanized sheet were counted respectively.

### (2) Tensile test

From the vulcanized sheet-shaped product, a test piece was punched out parallel with the grain direction of rubber (roll extrusion direction) by using dumbbell No. 3, and according to JIS K6251, this test piece was measured for tensile strength (MPa), elongation (%) and 25% tensile stress (MPa).

### (3) Hardness test (Duro A)

According to JIS K6253, the hardness of the vulcanized sheet-shaped product was measured with a durometer hardness testing machine type A.

### (4) Compression permanent set test

A vulcanizable rubber composition was vulcanized at 170°C for 25 minutes under a press pressure of 10 MPa in a mold having an inner diameter of 29 mm and a thickness 12.5 mm to give a test piece. According to JIS K6262, this test piece was kept in a state compressed by 25% at 150°C for 168 hours, and then measured for its compression permanent set (%).

### (5) Air-heating aging test

The same dumbbell No. 3 test piece as used in the tensile test described above was aged at 150°C for 504 hours in an air-heating aging test (normal oven method) prescribed in JIS K6257. After this aging, the test piece was used as a vulcanizate to be measured for its hardness by the durometer hardness testing machine type A according to JIS K6253, to determine a change (point) in the hardness before and after the aging.

### (6) Viscosity (Pascal seconds)

A Brookfield viscometer (trade name: MODEL DV-1+, manufactured by Brookfield) was used to measure the viscosities of the rubber component and liquid rubber composition (X) at 70°C.

### (Example 1)

According to the composition in Table 1, the respective ingredients were kneaded under the conditions of 50°C, 50 rpm, 10 minutes and 70% filling factor in a closed kneading machine (trade name: Labstation, W50 type mixer, cam-type rotor, 70 cc; manufactured by Brabender) to prepare a masterbatch composition.

The resulting masterbatch composition was introduced into a metal mold of 15 cm x 8 cm x 0.2 cm, kept at 100°C for 5 minutes under pressure and then press-molded at 40°C for 10 hours to give a sheet-shaped product. 1-mm or more short-fiber masses contained in the resulting sheet-shaped product were counted. The presence or absence of bleeding was confirmed.

Subsequently, a previously prepared rubber composition I incorporated as shown below was introduced into a closed kneading machine (trade name: Labstation, W50 type mixer, cam-type rotor, 70 cc; manufactured by Brabender) and kneaded for 1 minute, and the above masterbatch composition was introduced into it and kneaded for 3 minutes to prepare a rubber composition II. The kneading was carried out under the conditions of 50°C and 30 rpm. The filling factor was 70%. The amount of the masterbatch composition incorporated was prepared in such a way that the amount of short fibers therein was 4 parts based on 100 parts of the rubber component in the rubber composition I.

### <Ingredients in the rubber composition I>

- Solid rubber, 100 parts
   (Acrylonitrile-butadiene copolymer rubber hydrogenated product with an iodine value of 11 and an acrylonitrile unit content of 36%, Zetpol 2010L, manufactured by Zeon Corporation)
- Zinc dimethacrylate, 15 parts
- Filler, 25 parts
   (Carbon black, Seast S N-770, manufactured by Tokai Carbon Co., Ltd.)
- Plasticizer, 10 parts
   (Tri-(2-ethylhexyl) trimellitate)
- Vulcanizing agent, 10 parts
   (1,3-Bis(tertiary-butylperoxyisopropyl) benzene, Peroxymon F-40, manufactured by NOF Corporation)
- Vulcanization accelerator, 10 parts
(Zinc oxide, Zinc White No. 1)
- Antioxidant 1, 1.5 parts
   (4,4'-(α,α-Dimethylbenzyl) diphenylamine, Noclac CD manufactured by Ouchi Shinko Chemical Industrial Co. , Ltd.)
- Antioxidant 2, 1.5 parts
   (2-Mercaptobenzimidazole zinc salt, Noclac MBZ manufactured by Ouchi Shinko Chemical Industrial Co., Ltd.)

The rubber composition II thus obtained was extruded into a sheet of 0.23 cm in thickness by a roll at 50°C, then introduced into a metal mold of 15 cm x 8 cm x 0.2 cm and press-molded at 170°C for 20 minutes under pressure to give a vulcanized sheet-shaped product. This vulcanized sheet-shaped product was examined in the tensile test, hardness test and air-heating aging test. Further, the surface of this vulcanized sheet-shaped product was polished with a grinder, and then 0.5 mm or more short-fiber masses contained in the vulcanized sheet-shaped product were counted. The results are shown in Table 1 (In the following, the same procedure as above was carried out in Examples 2 and 3 and Comparative Examples 1 to 6).

### (Example 2)

A masterbatch composition was prepared in the same manner as in Example 1 except that the type of the nitrile group-containing copolymer rubber was changed, and the resulting composition was used to prepare a vulcanized sheet-shaped product which was then examined in the tests for evaluation of respective characteristics.

### (Example 3)

A masterbatch composition was prepared in the same manner as in Example 1 except that the type of the plasticizer was changed, and the resulting composition was used to prepare a vulcanized sheet-shaped product which was then examined in the tests for evaluation of respective characteristics.

### (Comparative Examples 1 and 2)

Masterbatch compositions were prepared in the same manner as in Example 1 except that the type of the plasticizer was changed into the one having a molecular weight of 400 or less, and the resulting compositions were used to prepare vulcanized sheet-shaped products which were then examined in the tests for evaluation of respective characteristics.

### (Comparative Example 3)

A masterbatch composition was prepared in the same manner as in Example 1 except that the amount of the nitrile group-containingcopolymerrubberwaschangedfrom30parts to 70 parts and the plasticizer was not used, and the resulting composition was used to prepare a vulcanized sheet-shaped product which was then examined in the tests for evaluation of respective characteristics.

### (Comparative Example 4)

A masterbatch composition was prepared in the same manner as in Example 1 except that the amount of the nitrile group-containing copolymer rubber was changed from 30 parts to 3 parts, the amount of the plasticizer was changed from 40 parts to 77 parts, and the amount of the short fibers was changed from 30 parts to 20 parts, and the resulting composition was used to prepare a vulcanized sheet-shaped product which was then examined in the tests for evaluation of respective characteristics.

### (Comparative Example 5)

A vulcanized sheet-shaped product was prepared in the same manner as in Example 1 except that the short fibers were not incorporated, and the resulting vulcanized sheet-shaped product was examined in the tests for evaluation of respective characteristics.

### (Comparative Example 6)

A vulcanized sheet-shaped product was prepared in the same manner as in Example 1 except that the short fibers were incorporated in place of the masterbatch composition, and the resulting vulcanized sheet-shaped product was examined in the tests for evaluation of respective characteristics.

**Table 1**

| | Examples | | | Comparative Examples | | | | | |
|---|---|---|---|---|---|---|---|---|---|
| | 1 | 2 | 3 | 1 | 2 | 3 | 4 | 5 | 6 |
| <Masterbatch composition> | | | | | | | | | |
| ·Nitrile group-containing copolymer rubber 1 (parts) | 30 | - | 30 | 30 | 30 | 70 | 3 | - | - |
| ·Nitrile group-containing copolymer rubber 2 (parts) | - | 30 | - | - | - | - | - | - | - |
| ·Plasticizer 1 (parts) | 40 | 40 | - | - | - | - | 77 | - | - |
| ·Plasticizer 2 (parts) | - | - | 40 | - | - | - | - | - | - |
| ·Plasticizer 3 (parts) | - | - | - | 40 | - | - | - | - | - |
| ·Plasticizer 4 (parts) | - | - | - | - | 40 | - | - | - | - |
| ·Short fibers (parts) | 30 | 30 | 30 | 30 | 30 | 30 | 20 | - | - |
| Total (parts) | 100 | 100 | 100 | 100 | 100 | 100 | 100 | - | - |

| (Characteristics evaluation) | | | | | | | | | |
|---|---|---|---|---|---|---|---|---|---|
| ·Number of 1 mm or more short-fiber masses | 26 | 22 | 25 | 28 | 23 | 420 | 16 | - | - |
| ·Occurrence of bleeding | slightly occurs | absent | slightly occurs | slightly occurs | slightly occurs | absent | Significantly occurs | - | - |

| <Rubber composition II> | | | | | | | | | |
|---|---|---|---|---|---|---|---|---|---|
| ·Rubber composition I (parts) | 173 | 173 | 173 | 173 | 173 | 173 | 173 | 173 | 173 |
| ·Masterbatch composition (containing short fibers) (parts) | 13.33 | 13.33 | 13.33 | 13.33 | 13.33 | 13.33 | 20 | - | - |
| ·Short fibers (parts) | - | - | - | - | - | - | - | - | 4 |

| (Characteristics evaluation) | | | | | | | | | |
|---|---|---|---|---|---|---|---|---|---|
| ·Number of 0.5 mm or more short-fiber masses | 9 | 7 | 7 | 10 | 9 | 113 | 3 | 0 | 260 |

| ·Tensile test | | | | | | | | | |
|---|---|---|---|---|---|---|---|---|---|
| Tensile strength (MPa) | 19.2 | 19.4 | 19.1 | 18.8 | 17.9 | 15.8 | 16.4 | 26.9 | 14.8 |
| Elongation (%) | 360 | 350 | 350 | 340 | 330 | 150 | 250 | 470 | 70 |
| Tensile stress (MPa) | 12.2 | 12.3 | 11.9 | 11.2 | 11.1 | 12.9 | 9.4 | 1.2 | 13.2 |

| ·Hardness test (Duro A) | | | | | | | | | |
|---|---|---|---|---|---|---|---|---|---|
| Hardness | 76 | 75 | 75 | 75 | 75 | 76 | 70 | 68 | 76 |

| ·Air heating aging test | | | | | | | | | |
|---|---|---|---|---|---|---|---|---|---|
| Change in hardness (points) | +7 | +7 | +8 | +11 | +11 | +8 | +14 | +9 | +8 |

### <Ingredients in the table>

- Nitrile group-containing copolymer rubber 1 (Acrylonitrile-butadiene copolymer rubber hydrogenated product with an iodine value of 28, an acrylonitrile unit content of 36% and a Mooney viscosity of ML₍₁₊₄₎ of 78 at 100°C, Zetpol 2020, manufactured by Zeon Corporation)
- Nitrile group-containing copolymer rubber 2 (Acrylonitrile-butadiene copolymer rubber hydrogenated product with an iodine value of 27, an acrylonitrile unit content of 19% and a Mooney viscosity of ML₍₁₊₄₎ of 70 at 100°C, Zetpol 4320, manufactured by Zeon Corporation)
- Plasticizer 1
   (Tri-(2-ethylhexyl) trimellitate with a molecular weight of 547, Adekasizer C-8, manufactured by ADEKA Corporation)
- Plasticizer 2
   (Adipic acid diester compound with a molecular weight of 434, Adekasizer RS107, manufactured by ADEKA Corporation)
- Plasticizer 3
   (Di-(2-ethylhexyl) phthalate with a molecular weight of 391, Vinycizer 80, manufactured by Kao Corporation)
- Plasticizer 4
   (Di- (2-ethylhexyl) adipate with a molecular weight of 371, DOA, manufactured by J-PLUS)
- Short fibers
   (Para-aramid pulp with a length of 1.0 to 1.8 mm, Twaron 1091, manufactured by Teijin Twaron BV)

Table 1 reveals the following: That is, it was found that when the plasticizer having a molecular weight of less than 400 is used, the product is inferior in heat aging resistance (Comparative Examples 1 and 2). When the plasticizer was not used, the short fibers were extremely poor in dispersibility, thus failing to achieve the mechanical properties of the vulcanized sheet-shaped product, such as tensile strength and elongation (Comparative Example 3). On the other hand, when the amount of the nitrile group-containing copolymer rubber was too small, bleeding occurred, and the vulcanized sheet-shaped product was also inferior in mechanical properties (Comparative Example 4). On the other hand, when the short fibers were added without using the masterbatch composition, the short fibers were extremely inferior in dispersibility, and the mechanical properties of the vulcanized sheet-shaped product could not be obtained (Comparative Example 6).

On the other hand, it was found that when the product using the nitrile group-containing copolymer rubber with an acrylonitrile unit content of 40% by weight or less compounded with the plasticizer having a molecular weight of 400 or more in a specified ratio is used, the short fibers are dispersed well in the masterbatch composition and in the vulcanized sheet-shaped product, to exhibit higher mechanical properties than those in the case where the short fibers are not incorporated (Comparative Example 5). It was also found that the product is excellent in heat aging resistance (Examples 1 to 3).

### (Example 4)

According to the formulation shown in Table 2, a masterbatch composition was prepared in the same manner as in Example 1, and a sheet-shaped product was obtained in the same manner as in Example 1. 1 mm or more short fiber masses contained in the resulting sheet-shaped product were counted.

Subsequently, by using the rubber composition I described in Example 1, a rubber composition III was obtained in the same manner as in Example 1.

The rubber composition III thus obtained was extruded to give a vulcanized sheet-shaped product in the same manner as in Example 1. This vulcanized sheet-shaped product was examined as described above in the tensile test, hardness test, compression permanent set test and air-heating aging test. Further, the surface of this vulcanized sheet-shaped product was polished with a grinder, and then 0.5-mm or more short-fiber masses contained in the vulcanized sheet-shaped product were counted. The results are shown in Table 2 (The same procedure as above was carried out in Examples 5 to 8 and Comparative Examples 7 to 12).

### (Example 5)

A masterbatch composition was prepared in the same manner as in Example 4 except that the amount of the multifunctional compound was changed from 40 parts to 50 parts and the amount of the short fibers was changed from 30 parts to 20 parts, and the resulting composition was used to prepare a vulcanized sheet-shaped product which was then examined in the tests for evaluation of respective characteristics.

### (Example 6)

A masterbatch composition was prepared in the same manner as in Example 4 except that the amount of the nitrile group-containingcopolymerrubberwaschangedfrom30parts to 50 parts, the amount of the multifunctional compound was changed from 40 parts to 30 parts and the amount of the short fibers was changed from 30 parts to 20 parts, and the resulting composition was used to prepare a vulcanized sheet-shaped product which was then examined in the tests for evaluation of respective characteristics.

### (Example 7)

A masterbatch composition was prepared in the same manner as in Example 4 except that the amount of the nitrile group-containingcopolymerrubberwaschangedfrom30parts to 15 parts, the amount of the multifunctional compound was changed from 40 parts to 65 parts and the amount of the short fibers was changed from 30 parts to 20 parts, and the resulting composition was used to prepare a vulcanized sheet-shaped product which was then examined in the tests for evaluation of respective characteristics.

### (Example 8)

A masterbatch composition was prepared in the same manner as in Example 4 except that the amount of the multifunctional compound was changed from 40 parts to 20 parts and 20 parts of the plasticizer were used, and the resulting composition was used to prepare a vulcanized sheet-shaped product which was then examined in the tests for evaluation of respective characteristics.

### (Comparative Example 7)

A masterbatch composition was prepared in the same manner as in Example 4 except that 40 parts of the plasticizer were used in place of the multifunctional compound, and the resulting composition was used to prepare a vulcanized sheet-shaped product which was then examined in the tests for evaluation of respective characteristics. In this comparative example, bleeding was observed.

### (Comparative Example 8)

A masterbatch composition was prepared in the same manner as in Example 4 except that the amount of the nitrile group-containing copolymer rubber was changed from 30 parts to 67 parts and the amount of the multifunctional compound was changed from 40 parts to 3 parts, and the resulting composition was used to prepare a vulcanized sheet-shaped product which was then examined in the tests for evaluation of respective characteristics.

### (Comparative Example 9)

A masterbatch composition was prepared in the same manner as in Example 4 except that the amount of the nitrile group-containing copolymer rubber was changed from 30 parts to 70 parts and the multifunctional compound was not used, and the resulting composition was used to prepare a vulcanized sheet-shaped product which was then examined in the tests for evaluation of respective characteristics.

### (Comparative Example 10)

A masterbatch composition was prepared in the same manner as in Example 4 except that the amount of the nitrile group-containing copolymer rubber was changed from 30 parts to 3 parts, the amount of the multifunctional compound was changed from 40 parts to 77 parts and the amount of the short fibers was changed from 30 parts to 20 parts, and the resulting composition was used to prepare a vulcanized sheet-shaped product which was then examined in the tests for evaluation of respective characteristics. In this comparative example, bleeding was observed.

### (Comparative Example 11)

A vulcanized sheet-shaped product was prepared in the same manner as in Example 4 except that the short fibers were not incorporated, and the resulting sheet was examined in the tests for evaluation of respective characteristics.

### (Comparative Example 12)

A vulcanized sheet-shaped product was prepared in the same manner as in Example 4 except that the short fibers were incorporated in place of the masterbatch composition, and the resulting sheet-shaped product was examined in the tests for evaluation of respective characteristics.

**Table 2**

| | Examples | | | | | Comparative Examples | | | | | |
|---|---|---|---|---|---|---|---|---|---|---|---|
| | 4 | 5 | 6 | 7 | 8 | 7 | 8 | 9 | 10 | 11 | 12 |
| <Masterbatch composition> | | | | | | | | | | | |
| ·Nitrile group-containing copolymer rubber (parts) | 30 | 30 | 50 | 15 | 30 | 30 | 67 | 70 | 3 | - | - |
| ·Multifunctional compound (parts) | 40 | 50 | 30 | 65 | 20 | - | 3 | - | 77 | - | - |
| ·Plasticizer (parts) | - | - | - | - | 20 | 40 | - | - | - | - | - |
| ·Short fibers (parts) | 30 | 20 | 20 | 20 | 30 | 30 | 30 | 30 | 20 | - | - |
| Total (parts) | 100 | 100 | 100 | 100 | 100 | 100 | 100 | 100 | 100 | - | - |

| (Characteristics evaluation) | | | | | | | | | | | |
|---|---|---|---|---|---|---|---|---|---|---|---|
| ·Number of 1 mm or more short-fiber masses | 26 | 18 | 17 | 16 | 25 | 28 | 310 | 420 | 14 | - | - |

| <Rubber composition III> | | | | | | | | | | | |
|---|---|---|---|---|---|---|---|---|---|---|---|
| ·Rubber composition I (parts) | 173 | 173 | 173 | 173 | 173 | 173 | 173 | 173 | 173 | 173 | 173 |
| ·Masterbatch composition (containing short fibers) (parts) | 13.33 | 20 | 20 | 20 | 13.33 | 13.33 | 13.33 | 13.33 | 20 | - | - |
| ·Short fibers (parts) | - | - | - | - | - | - | - | - | - | - | 4 |

| (Characteristics evaluation) | | | | | | | | | | | |
|---|---|---|---|---|---|---|---|---|---|---|---|
| ·Number of 0.5 mm or more short-fiber masses | 8 | 4 | 3 | 2 | 6 | 10 | 93 | 113 | 3 | 0 | 260 |

| ·Tensile test | | | | | | | | | | | |
|---|---|---|---|---|---|---|---|---|---|---|---|
| Tensile strength (MPa) | 19.6 | 18.2 | 19.2 | 17.6 | 19.8 | 18.8 | 16.3 | 15.8 | 16.4 | 26.9 | 14.8 |
| Elongation (%) | 350 | 270 | 310 | 260 | 370 | 340 | 160 | 150 | 240 | 470 | 70 |
| Tensile stress (MPa) | 12.6 | 11.5 | 12.7 | 11.1 | 12.1 | 11.2 | 12.7 | 12.9 | 10.9 | 1.2 | 13.2 |

| ·Hardness test (Duro A) | | | | | | | | | | | |
|---|---|---|---|---|---|---|---|---|---|---|---|
| Hardness | 77 | 75 | 77 | 74 | 76 | 75 | 77 | 76 | 74 | 68 | 76 |

| Compression permanent set test | | | | | | | | | | | |
|---|---|---|---|---|---|---|---|---|---|---|---|
| Compression permanent set (%) | 55 | 57 | 52 | 58 | 60 | 68 | 67 | 67 | 60 | 55 | 67 |

| Air heating aging test | | | | | | | | | | | |
|---|---|---|---|---|---|---|---|---|---|---|---|
| Change in hardness (points) | +7 | +8 | +6 | +8 | +8 | +11 | +7 | +8 | +12 | +9 | +8 |

### <Ingredients in the table>

- Nitrile group-containing copolymer rubber
   (Acrylonitrile-butadiene copolymer rubber hydrogenated product with an iodine value of 28, an acrylonitrile unit content of 36% and a Mooney viscosity of ML₍₁₊₄₎ of 78 at 100°C, Zetpol 2020, manufactured by Zeon Corporation)
- Multifunctional compound
   (Triallylisocyanurate, TAIC, manufactured by Nippon Kasei Chemical Co., Ltd.)
- Plasticizer
   (Di-(2-ethylhexyl) phthalate with a molecular weight of 391, Vinycizer 80, manufactured by Kao Corporation)
- Short fibers
   (Para-aramid pulp with a length of 1.0 to 1.8 mm, Twaron 1091, manufactured by Teijin Twaron BV)

Table 2 reveals the following: That is, it was found that when the plasticizer having a molecular weight of less than 400 is used in place of the multifunctional compound, bleeding occurs and the product is inferior in compression permanent set and heat aging resistance (Comparative Example 7). Even if the multifunctional compound was used, the dispersibility of the short fibers was worsened when the amount of the multifunctional compound was too small (ComparativeExample8). When neither the multifunctional compound nor the plasticizer was used, the dispersibility of the short fibers was further worsened (Comparative Example 9). When the dispersibility of the short fibers was thus worsened, the mechanical properties of the vulcanized sheet-shaped product such as tensile strength and elongation could not be obtained. On the other hand, when the amount of the multifunctional compound blended was too large, bleeding occurred, and the vulcanized sheet-shaped product was inferior in mechanical properties (Comparative Example 10). On the other hand, when the short fibers were added without using the masterbatch composition, the short fibers were extremely inferior in dispersibility, and even the mechanical properties of the vulcanized sheet-shaped product could not be obtained (Comparative Example 12).

On the other hand, it was found that when the multifunctional compound is used in a specific ratio, the short fibers are dispersed well in the masterbatch composition and in the vulcanized sheet-shaped product, to exhibit higher mechanical properties than those in the case (Comparative Example 11) where the short fibers are not incorporated. It was also found that the product is excellent in heat aging resistance with less compression permanent set (Examples 4 to 8).

### (Example 9)

According to the formulation shown in Table 3, a masterbatch composition was prepared in the same manner as in Example 1, and a sheet-shaped product was obtained in the same manner as in Example 1. 1-mm or more short fiber masses contained in the resulting sheet-shaped product were counted.

Subsequently, by using the rubber composition I described in Example 1, a rubber composition IV was obtained in the same manner as in Example 1.

The rubber composition IV thus obtained was extruded to give a vulcanized sheet-shaped product in the same manner as in Example 1.

The vulcanized sheet-shaped product was measured for its tensile strength, elongation, tensile stress and hardness by the same methods as described above. After the surface of this vulcanized sheet-shaped product was polished with a grinder, 0.5-mm or more short-fiber masses contained in the vulcanized sheet-shaped product were counted. The results are shown in Table 3 (The same procedure as above was carried out in Examples 10 to 15 and Comparative Examples 13 to 16 below).

### (Examples 10 and 11)

Masterbatch compositions were prepared in the same manner as in Example 9 except that the amount of the liquid rubber 1 incorporated was changed from 60 parts to 30 parts and 30 parts of the multifunctional compound or 30 parts of the plasticizer were used, and the resulting compositions were used to prepare vulcanized sheet-shaped products which were then examined in the tests for evaluation of respective characteristics.

### (Examples 12 and 13)

Masterbatch compositions were prepared in the same manner as in Example 9 except that a filler was incorporated and the total amount of the filler and the amount of the liquid rubber 1 incorporated was set to 60 parts, and the resulting compositions were used to prepare vulcanized sheet-shaped products which were then examined in the tests for evaluation of respective characteristics.

### (Example 14)

A masterbatch composition was prepared in the same manner as in Example 9 except that the amount of the liquid rubber 1 incorporated was changed from 60 parts to 20 parts and the amount of the short fibers was changed from 40 parts to 80 parts, and the resulting composition was used to prepare a vulcanized sheet-shaped product which was then examined in the tests for evaluation of respective characteristics.

### (Example 15)

A masterbatch composition was prepared in the same manner as in Example 9 except that 10 parts of the liquid rubber 2 were used and 50 parts of the multifunctional compound were used, and the resulting composition was used to prepare a vulcanized sheet-shaped product which was then examined in the tests for evaluation of respective characteristics.

### (Comparative Example 13)

A masterbatch composition was prepared in the same manner as in Example 9 except that the amount of the liquid rubber 1 incorporated was changed from 60 parts to 50 parts and 10 parts of the filler were incorporated, and the resulting composition was used to prepare a vulcanized sheet-shaped product which was then examined in the tests for evaluation of respective characteristics.

### (Comparative Example 14)

A masterbatch composition was prepared in the same manner as in Example 9 except that the liquid rubber 2 was used in place of the liquid rubber 1, and the resulting composition was used to prepare a vulcanized sheet-shaped product which was then examined in the tests for evaluation of respective characteristics.

### (Comparative Example 15)

A masterbatch composition was prepared in the same manner as in Example 9 except that solid rubber was used in place of the liquid rubber 1, and the resulting composition was used to prepare a vulcanized sheet-shaped product which was then examined in the tests for evaluation of respective characteristics.

### (Comparative Example 16)

A vulcanized sheet-shaped product was prepared in the same manner as in Example 9 except that the short fibers were incorporated in place of the masterbatch composition, and the resulting sheet was examined in the tests for evaluation of respective characteristics.

**Table 3**

| | Examples | | | | | | | Comparative Examples | | | |
|---|---|---|---|---|---|---|---|---|---|---|---|
| | 9 | 10 | 11 | 12 | 13 | 14 | 15 | 13 | 14 | 15 | 16 |
| <Masterbatch composition> | | | | | | | | | | | |
| ·Liquid rubber 1 (parts) | 60 | 30 | 30 | 53 | 57 | 20 | - | 50 | - | - | - |
| ·Liquid rubber 2 (parts) | - | - | - | - | - | - | 10 | - | 60 | - | - |
| ·Solid rubber (parts) | - | - | - | - | - | - | - | - | - | 60 | - |
| ·Multifunctional compound (parts) | - | 30 | - | - | - | - | 50 | - | - | - | - |
| ·Plasticizer (parts) | - | - | 30 | - | - | - | - | - | - | - | - |
| ·Short fibers (parts) | 40 | 40 | 40 | 40 | 40 | 80 | 40 | 40 | 40 | 40 | - |
| ·Filler (parts) | - | - | - | 7 | 3 | - | - | 10 | - | - | - |
| Total (parts) | 100 | 100 | 100 | 100 | 100 | 100 | 100 | 100 | 100 | 100 | - |

| (Viscosity) | | | | | | | | | | | |
|---|---|---|---|---|---|---|---|---|---|---|---|
| Rubber component (Pascal seconds) | 10 | 10 | 10 | 10 | 10 | 10 | 600 | 10 | 600 | Not measurable | - |
| ·Liquid rubber composition (Pascal seconds) | 10 | 4.7 | 4 | 10 | 10 | 10 | 100 | 10 | 600 | Not measurable | - |

| (Characteristics evaluation) | | | | | | | | | | | |
|---|---|---|---|---|---|---|---|---|---|---|---|
| ·Number of 1 mm or more short-fiber masses | 2 | 2 | 3 | 15 | 7 | 32 | 12 | 50 | 70 | 460 | - |

| <Rubber composition IV> | | | | | | | | | | | |
|---|---|---|---|---|---|---|---|---|---|---|---|
| ·Rubber composition I (parts) | 173 | 173 | 173 | 173 | 173 | 173 | 173 | 173 | 173 | 173 | 173 |
| ·Masterbatch composition (containing short fibers) (parts) | 10 | 10 | 10 | 10 | 10 | 5 | 10 | 10 | 10 | 10 | - |
| ·Short fibers (parts) | - | - | - | - | - | - | - | - | - | - | 4 |

| (Characteristics evaluation) | | | | | | | | | | | |
|---|---|---|---|---|---|---|---|---|---|---|---|
| 'Number of 0.5 mm or more short-fiber masses ·Tensile strength (MPa) | 0 | 2 | 3 | 11 | 6 | 20 | 8 | 42 | 40 | 130 | 260 |
| | 20.1 | 19.2 | 19.4 | 19.2 | 20.2 | 18.8 | 19.5 | 17.8 | 17.5 | 15.2 | 14.8 |
| ·Elongation (%) | 380 | 340 | 370 | 320 | 360 | 310 | 300 | 260 | 240 | 130 | 70 |
| ·Tensile stress (MPa) | 12.3 | 12.5 | 11.2 | 12.2 | 12.4 | 12.4 | 13.2 | 12.6 | 12.4 | 12.9 | 13.2 |
| ·Hardness (Duro A) | 75 | 77 | 74 | 76 | 75 | 75 | 78 | 76 | 76 | 76 | 76 |

### <Ingredients in the table>

- Liquid rubber 1
   (Acrylonitrile-butadiene copolymer rubber hydrogenated product with an iodine value of 30, an acrylonitrile unit content of 36% and a viscosity at 70°C of 10 Pascal seconds by a Brookfield viscometer)
- Liquid rubber 2
   (Acrylonitrile-butadiene copolymer rubber with an acrylonitrile unit content of 36% and a viscosity at 70°C of 600 Pascal seconds by a Brookfield viscometer)
- Solid rubber
   (Acrylonitrile-butadiene copolymer rubber hydrogenated product with an iodine value of 28, an acrylonitrile unit content of 36% and a Mooney viscosity at 100°C of 78 as determined according to JIS K6300, Zetpol 2020, manufactured by Zeon Corporation)
- Short fibers
   (Para-aramid pulp with a length of 1.0 to 1.8 mm, Twaron 1091, manufactured by Teijin Twaron BV)
- Multifunctional compound
   (Trimethallyl isocyanurate, TAIC, manufactured by Nippon Kasei Chemical Co., Ltd.)
- Plasticizer
   (Tri-(2-ethylhexyl) trimellitate with a molecular weight of 547, Adekasizer C-8, manufactured by ADEKA Corporation)
- Filler
   (Carbon black, Seast SO N-550, manufactured by Tokai Carbon Co., Ltd.)

Table 3 reveals the following: That is, when a masterbatch composition comprising 10% filler was used, the dispersibility of the short fibers in the masterbatch composition was deteriorated and a large number of masses were observed in the resulting vulcanized sheet-shaped product (Comparative Example 13). When the product using the liquid rubber composition (X) whose viscosity was higher than the predetermined range was used, the dispersibility of the short fibers in the masterbatch composition and in the vulcanized sheet-shaped product was further deteriorated (Comparative Examples 14 and 15). When the short fibers were added without using the masterbatch composition, the short fibers were extremely inferior in dispersibility (Comparative Example 16). It was thus revealed that when the short fibers are poor in dispersibility, the vulcanized sheet-shaped product is inferior in tensile strength and elongation.

On the other hand, when the liquid rubber composition (X) having viscosity in the predetermined range was used and simultaneously the incorporated amount of the filler was reduced, the short fibers were dispersed well in the masterbatch composition and in the vulcanized sheet-shaped product, to exhibit higher tensile strength and higher elongation. Further, the product exhibits tensile stress and hardness in favorable ranges (Examples 9 to 15).

## Claims

1. A masterbatch composition comprising 5 to 78 parts by weight of α, β-ethylenically unsaturated nitrile monomer unit-containing copolymer rubber (A), 5 to 78 parts by weight of a multifunctional compound (B) and/or a plasticizer (B') having a molecular weight of 400 or more, and 17 to 90 parts by weight of short fibers (C) of 0.1 to 12 mm in length, provided that the sum of (A), (B) and/or (B'), and (C) is 100 parts by weight.

2. The masterbatch composition according to claim 1, wherein the α,β-ethylenically unsaturated nitrile monomer unit-containing copolymer rubber (A) is a nitrile group-containing copolymer rubber wherein the content of the α,β-ethylenically unsaturated nitrile monomer unit is 40% by weight or less.

3. A rubber composition comprising the masterbatch composition of claim 1 or 2.

4. A vulcanizate obtained by vulcanizing the rubber composition of claim 3.

5. A masterbatch composition comprising 25 to 550 parts by weight of short fibers (Y) of 0.1 to 12 mm in length, based on 100 parts by weight of a liquid rubber composition (X) having a viscosity of 500 Pascal seconds or less at 70°C as determined by a Brookfield viscometer, wherein the content of a filler in the masterbatch composition is 8% by weight or less.

6. A rubber composition comprising the masterbatch composition of claim 5.

7. A vulcanizate obtained by vulcanizing the rubber composition of claim 6.
